Europäisches Patentamt

(19) European Patent Office    (11) Publication number:    **0 068 054**

Office européen des brevets                            **B1**

(12)                    EUROPEAN PATENT SPECIFICATION

(45) Date of publication of patent specification: **20.02.85**    (51) Int. Cl.⁴: **B 60 S 1/46**

(21) Application number: **81303009.5**

(22) Date of filing: **01.07.81**

(54) Windscreen washer unit.

<table>
<tr><td>(43) Date of publication of application:<br>**05.01.83 Bulletin 83/01**</td><td>(73) Proprietor: **DEERE & COMPANY**<br>**1 John Deere Road**<br>**Moline Illinois 61265 (US)**</td></tr>
<tr><td>(45) Publication of the grant of the patent:<br>**20.02.85 Bulletin 85/08**</td><td>(72) Inventor: **Hauk, Klaus**<br>**Berlinerstrasse 28**<br>**D-6701 Altrip (DE)**</td></tr>
<tr><td>(84) Designated Contracting States:<br>**AT DE FR GB IT SE**</td><td>(74) Representative: **Pears, David Ashley et al**<br>**REDDIE & GROSE 16 Theobalds Road**<br>**London WC1X 8PL (GB)**</td></tr>
<tr><td>(56) References cited:<br>**DE-U-7 536 534**</td><td></td></tr>
</table>

Courier Press, Leamington Spa, England.

# Description

The present invention relates to a windscreen washer unit of the type defined in the introductory part of claim 1. Such a unit represents a compact and convenient unit which already has wide commercial usage. The pump is neatly contained within the typically parallelipidal volume defined by the container but is actually outside the container, so that the electric motor cannot be affected by the water in the container.

The unit is conventionally mounted in a protected position, either inside the engine compartment or behind the dashboard for example. Such a location is not very convenient especially in the case of a tractor or earthworking vehicle used in dirty conditions requiring much use of the windscreen washer and therefore frequent replenishment of the container. The driver has to open up the bonnet or fill the container in an inconvenient cramped location every time it runs dry.

The broad object of the present invention is to avoid such problems by providing a unit which can be mounted externally on the vehicle, where it can easily be replenished. Another problem then arises in that the electrical connector is exposed and, especially in dirty conditions, will become contaminated and subject to corrosion of the contact elements, so leading to poor electrical connections. It is a more specific object to overcome this further problem and the solution to the problems according to the invention is defined in the characterising part of claim 1.

A further problem is that, although several pump manufacturers have standardised their pumps in many respects, including the use of terminals for a common type of DIN (German Industry Standard) connector, they have not, as yet, standardised the location on top of the pump for the blade terminals. This means that different cover plates could be needed for different pumps which would lead to increased tooling costs and inventory. This need is avoided by the development of the invention according to claim 2.

The invention achieves all of its objects with only one additional part, the cover plate, and simple adaptation of the connector to effect the attachment of the cover plate thereto. The cover plate can be an inexpensive injection moulding of a black polyamide plastics material for example.

The invention will be described in more detail, by way of example, with reference to the accompanying drawings:

Figure 1 is a partially sectioned elevation of a washer unit embodying the invention,

Figure 2 is a plan view of an electrical connector,

Figure 3 is an elevation of the connector,

Figure 4 is a plan view of the underside of a cover plate, and

Figure 5 shows a detail of the cover plate.

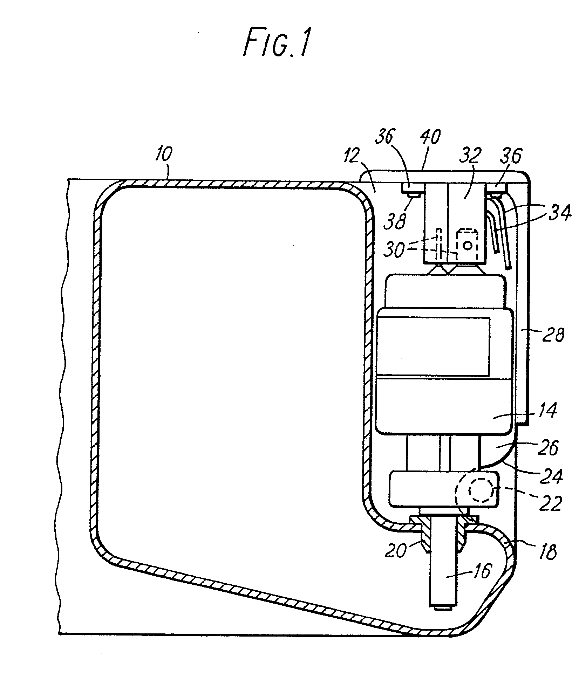

Referring to Figure 1, a windscreen washer unit comprises a water container 10 of tough, moulded plastics material formed with a recess 12 in one corner to accommodate an electric pump 14. The pump has an inlet tube 16 plugged into a lower, shelf part 18 of the container, through a sealing grommet 20. The outlet pipe 22 passes out sideways through a recessed part 24 of an endwall 26, 28 of the container which wraps partially round the pump, so that the latter is well protected.

The pump is a commercially available device with two blade terminals 30 at the top set at 90° to each other to receive a polarized connector 32. The wires 34 leading down from the connector is shown only partially to avoid confusing the drawing. The connector 32 is conventional except for the provision of two apertured lugs 36 at the top which snap on to pegs 38 depending from a cover plate 40. As will appear below, the cover plate has more than two pegs 38 but only two are shown in Figure 1, again to avoid confusing the drawing. It can clearly be seen that the cover plate 40 is supported in a fixed position relative to the pump 14 through the intermediary of the connector 32. The cover plate covers over the recess 12 so that further protection for the pump is provided, in particular for the electrical connections thereto.

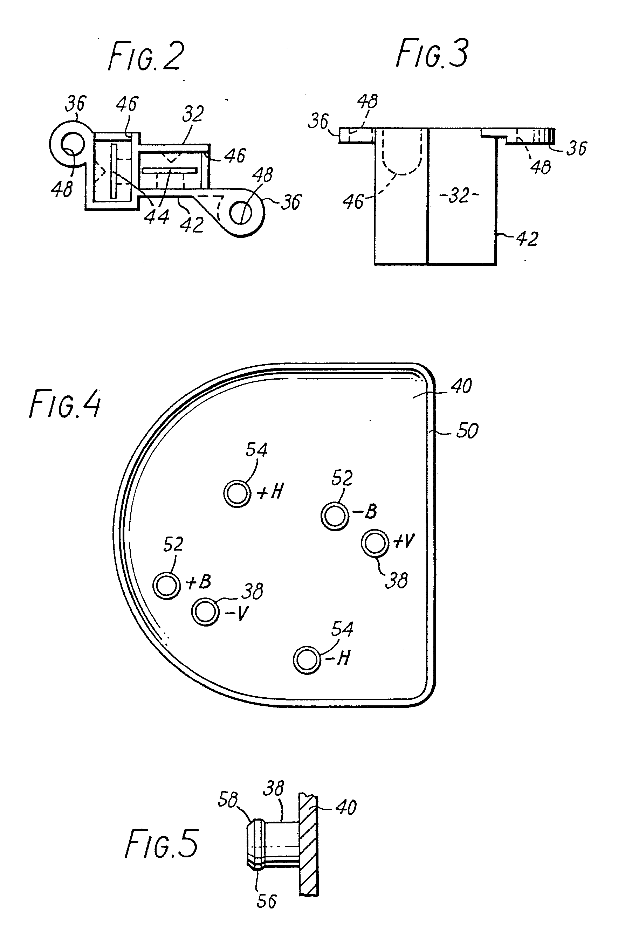

Details of the connector are shown in Figures 2 and 3. A moulded plastics body 42 houses receptacles 44 for the blade terminals 30 and notches 46 are provided for leading out the wires 34 by way of which the pump 14 is energised. At diagonally opposite corners at the top of the plug are the integrally moulded lugs 36 with holes 48 for snapping on to the pegs of the cover plate 40.

The underwise of the cover plate 40 is shown in Figure 4 and the plate is again of moulded plastics material (resistant to fuel, oil, weathering and ageing). The plate is shaped to cover the recess 12 (Figure 1) and has a downturned rim 50 to cooperate snugly with the top of the container 10. There is an array of six pegs depending from the underside of the plate, namely the pegs 38 of Figure 1 plus two further pairs of pegs 52 and 54.

A representative peg 38 is shown in detail in Figure 5 and has an enlarged head 56 with a chamfer 58 so that a lug 36 can be snapped on to the peg and is then retained securely by the head (although it can be prised off if this is ever needed).

The pegs of each pair 38, 52, 54 are spaced in correspondence with the spacing of the connector lug holes 48 (Figure 2) but are differently positioned to cater for different positions of the blade terminals 30 relative to the open top of the recess 12 to be covered over by the plate 40. Three different possibilites are allowed for in this specific embodiment and for each application, depending on the container and pump model selected the appropriate pair of pegs is used. To assist in designating the pair to be used the pegs are coded by adjacent embossed letters V, B and H for the pairs 38, 52, 54 respectively and signs — and + further denote which peg is adjacent the negative and which adjacent the positive receptacle of the connector 32.

The pegs may have a diameter of 2.5 mm with heads 3.3 mm in diameter while the holes 48 have a diameter of 3 mm, −0 mm, +0.2 mm. To further assist in snapping the lugs 36 on to the pegs, the mouths of the holes 48 are slightly flared.

The container 10 is elongated in the direction normal to the plane of the drawing in Figure 1 and has two integral flanges at the two ends of that face which is recessed to accommodate the pump, i.e. the right hand face in Figure 1. These flanges are used to fix the container against a mounting surface of the vehicle, e.g. by bolts through the flanges and this mounting surface completes the enclosure and protection of the pump and the electrical connections. Therefore the unit can be mounted externally and in one practical application, the mounting surface is the outside of a rear cross beam of a tractor cab below a rear window which the unit serves.

## Claims

1. A windscreen washer unit comprising a water container (10) with a recessed sidewall (12) accommodating an electric pump (14) having an inlet tube (16) plugged into a lower part of the container and an electrical connector (32) in plug-in engagement with terminals (30) on top of the electric pump, characterised by a cover plate (40) carried on top of the electrical connector (32) and cooperating with the recessed sidewall to protect the pump (14), the cover plate having at least one snap coupling part (38) complementary to a snap coupling part (36) on the electrical connector, whereby snap coupling can be made between the connector and plate to fix the plate in position.

2. A unit according to claim 1, characterised in that the cover plate (40) is mountable in a plurality of different positions on the connector (32) by virtue of an array of snap coupling parts (38, 52, 54) on the underside of the cover plate, at least one such part for each position.

3. A unit according to claim 1 or 2, characterised in that the or each snap coupling part (38) on the plate comprises a peg with an enlarged head (56) while the complementary part (36) is an apertured lug on the connector (32) and which snaps on to the peg.

4. A unit according to claim 3, characterised in that, in respect of the or each cover plate position, there are two spaced pegs (38), while the connector has two correspondingly spaced, apertured lugs (36).

5. A unit according to any of claims 1 to 4, characterised by fixing means on the container (10) positioned for fixing the container with the recessed sidewall against a vehicle mounting surface, thereby to complete the enclosure of the pump.

## Patentansprüche

1. Windschutzscheiben-Wascheinheit, welche einen Wasserbehälter (10) mit einer eine Vertiefung aufweisenden Seitenwand (12) zur Unterbringung einer elektrischen Pumpe (14) aufweist, welche ein in einem unteren Teil des Behälter eingestöpseltes Einlaßrohr (16) und einen elektrischen Verbinder (32) aufweist, der in eingekoppeltem Eingriff mit Anschlüssen (30) auf der Oberseite der elektrischen Pumpe steht, gekennzeichnet durch eine Abdeckplatte (40), die auf der Oberseite des elektrischen Verbinders (32) abgestützt ist und mit der Vertiefung in der Seitenwand zusammenwirkt, um die Pumpe (14) zu schützen, wobei die Abdeckplatte wenigstens einen schnappartigen Kupplungsteil (28) komplimentär zu einem schnappartigen Kupplungsteil (36) auf dem elektrischen Verbinder aufweist, wodurch zwischen dem Verbinder und der Platte zur Festlegung der Platte in der Stellung eine Schnappverbindung hegestellt werden kann.

2. Einheit nach Anspruch 1, dadurch gekennzeichnet, daß die Abdeckplatte (40) in einer Mehrzahl von verschiedenen Stellungen auf dem Verbinder (32) aufgrund einer Reihe von Schnappkupplungsteilen (38, 52, 54) an der Unterseite der Abdeckplatte montierbar ist, wobei wenigstens ein solcher Teil für jede Kupplungsstellung vorgesehen ist.

3. Einheit nach Anspruch 1 oder 2, dadurch gekennzeichnet, daß der oder jeder Schnappkupplungsteil (38) auf der Platte einen Zapfen mit einem erweiterten Kopf (56) aufweist, während der komplimentäre Teil (36) ein mit einer Öffnung versehener Ansatz an dem Verbinder (32) ist und der schnappartig auf den Zapfen greift.

4. Einheit nach Anspruch 3, dadurch gekennzeichnet, daß in Bezug auf die oder jede Stellung der Abdeckplatte zwei im Abstand angeordnete Zapfen (38) vorgesehen sind, während der Verbinder zwei korrespondierend im Abstand angeordnete, mit Öffnungen versehene Ansätze (36) aufweist.

5. Einheit nach irgend einem der Ansprüche 1 bis 4, gekennzeichnet durch Befestigungsmittel auf dem Behälter (10), die so angeordnet sind, daß er Behälter mit der vertieften Seitenwand gegen eine Fahrzeugmontagefläche befestigt werden kann, wodurch die Einschließung der Pumpe vervollständigt ist.

## Revendications

1. Appareil lave-glace comportant un réservoir d'eau (10) muni d'une paroi latérale (12) ménageant une cavité servant de logement à une pompe électrique (14) munie d'un tube d'admission (16) plongeant jusque dans la partie inférieure du réservoir et un dispositif de connexion électrique (32) coopérant par enfichage avec des bornes (30) prévues à la partie supérieure de la pompe électrique, caractérisé par une plaque formant couvercle (40) disposée à la partie supérieure du dispositif de connexion électrique (32) et coopérant avec la paroi latérale ménageant une cavité pour protéger la pompe (14), la plaque formant couvercle comportant au moins un élément d'accouplement par emboîtement élastique (38) complémentaire d'un élément d'accouplement par emboîtement élastique (36) prévu sur le dispositif de connexion électrique, de sorte qu'un accouplement par emboîtement élastique peut être réalisé entre le dispositif de connexion et la plaque pour assurer la fixation en place de la plaque.

2. Appareil suivant la revendication 1, caractérisé en ce que la plaque formant couvercle (40) peut être montée dans plusieurs positions différentes sur le dispositif de connexion (32) du fait de la présence d'une série d'éléments d'accouplement par emboîtement élastique (38, 52, 54) sur la face inférieure de la plaque formant couvercle, à raison d'au moins un élément de ce type pour chaque position.

3. Appareil suivant la revendication 1 ou 2, caractérisé en ce que l'élément ou chaque élément d'accouplement par emboîtement élastique (38) prévu sur la plaque comprend un bouton ou téton muni d'une tête plus large (56), tandis que l'élément complémentaire (36) est constitué par une patte perforée prévue sur le dispositif de connexion (32) et qui s'emboîte élastiquement sur le bouton.

4. Appareil suivant la revendication 3, caractérisé en ce que, pour la position ou pour chaque position de la plaque formant couvercle, il est prévu deux boutons espacés (38), tandis que le dispositif de connexion comprend deux pattes perforées (36) écartées de façon correspondante.

5. Appareil suivant l'une quelconque des revendications 1 à 4, caractérisé par des moyens de fixation prévus sur le réservoir (10), disposés de manière à fixer le réservoir dans une position dans laquelle la paroi munie d'une cavité est appliquée contre une surface de montage du véhicule, en complétant une enceinte de montage de la pompe.

# FIG.1

FIG.2

FIG.3

FIG.4

FIG.5